# EUROPEAN PATENT APPLICATION

(11) **EP 2 450 644 A1**
(43) Date of publication of application: **09.05.2012**
(21) Application number: 10190113.0
(22) Date of filing: 05.11.2010
(51) Int. Cl.: F24J 2/38, F24J 2/54

(54) **Portable heliostat**

(71) Applicant: Tommei, Daniele, 00151 Roma (IT); Tommei, Fabrizio, 00152 Roma (IT)
(72) Inventor: Tommei, Daniele, 00151 Roma (IT); Tommei, Fabrizio, 00152 Roma (IT)
(74) Representative: Leone, Mario

(57) **Abstract**

An heliostat (100) comprises a supporting structure (1) comprising a resting post (11) and a support (12) revolving with respect to the resting post (11) around a main rotation axis (α), a reflecting member (2) revolvingly mounted onto the revolving support (12), so as to be able to be oriented with respect to the resting post (11) on the main rotation axis (α) and onto an additional secondary rotation axis (β), perpendicular to the main rotation axis (α), a first optical sensor (31), a second optical sensor (32), wherein the main rotation axis (α) is parallel to an alignment direction between the heliostat (100) and a target (T) to be illuminated.

## Description

The present invention relates to an heliostat according to the preamble of claim 1.

As it is known, an heliostat is a device used to follow the Sun route during the span of the day, usually to orient the light thereof towards a precise spot thanks to the help of mirrors.

In order that the sun light is reflected in a determined direction it is necessary that the normal to the mirror surface is exactly the bisector of the angle formed between the Sun and the spot thereto one wishes to reflect the Sun light, defined target, by assuming the mirror as vertex.

In order to obtain this angulation, the mirror is automatically rotated by means of electric motors around at least two distinct rotation axes depending upon the sun position.

Two different types for controlling the mirror motion are known: a first one in which the rotation of the motors is controlled by specific algorithms which are based upon time and date of the day and a second one based upon optical sensors instead.

In the first case, the sun position being obtainable by means of astronomical calculations based upon the time and the date of the day, it is possible setting the mirror rotation depending upon the so-determined sun position. Such solution has the advantage of not being influenced by possible cloudiness conditions, not being necessary the sun effective presence in order to perform the mirror orientation.

However, it is evident that such control systems can hardly be applied in portable heliostats, as the calculations of the sun position are performed by referring to the installation geographical spot of the heliostat and the precise orientation of the same.

Consequently, the shifting of the heliostat from a position to another requires a complete and complex system re-calibration.

The second typology, instead, uses sensors determining the sun position and, based upon this one, they orient the mirror so as to direct the reflected solar light towards the target.

In this second typology, in order to orient the mirror to the bisector between the angle formed by: sun, mirror and target, two methods can be used. The first one is based upon levers and gears orienting the mirror by halving mechanically the angle formed by the sensor (which will be always kept oriented towards the Sun) and the target. The second method, contrary to the first one, instead of keeping the sensor oriented towards the sun, will keep the sun reflection, through the mirror, always oriented towards the sensor. The sensor precise alignment with the target, performed during the installation phase, will guarantee the correct target lighting.

The solution based upon the first method of this second typology, apart from requiring a more complex mechanics has a reduced operation precision.

The solution based instead upon the second method, reveals however a little practical when the heliostat main rotation takes place around an azimuthal axis. In this case, in fact, the sensor could likely be in a shadow area, when the mirror angulation current does not reflect the sun light onto the sensor, in practice by preventing the heliostat from knowing the direction of the rotations to be performed to recover the alignment.

This problem can verify during the normal operation of the heliostat, after the passage of a cloud, in which case the alignment with the sun is most likely lost and, for the same reasons illustrated above, the device is not able to track the solar light.

As alternative to the rotation around the azimuthal axis, the US patent US 6,899,096 describes an heliostat which is oriented by means of mirror polar rotation around a first axis parallel to the earth rotation axis and around a second axis perpendicular to the previous one. The angular position with respect to such axes is regulated by means of three sensors. A first sensor, which rotates parallel to the first mirror axis with a rotation relationship of two to one, allows the initial alignment of a mirror support through rotation around the first axis.

Once such alignment has taken place, the control is assigned to two additional sensors, mounted in fixed way on a member resting upon the floor of the heliostat, which, by means of the mirror rotation around the second axis, keep the solar rays towards the sensor.

However, even this solution has some drawbacks. The use of three different sensors and the passage from a control system to another one requests a quite complex structure both from the mechanical and the electronic point of view. The installation phase requests a precise knowledge of the spot wherein the heliostat is placed, as it is required that the main rotation axis is parallel to the earth inclination axis.

Furthermore, as the two target sensors are fixed whereas the mirror rotates on a first axis normal with respect thereto, the inclination of the second axis with respect to the sensors' direction will change continuously during the day by producing contemporary variations on both sensors and by making practically impossible to use information provided therefrom without knowing the current polar inclination.

Therefore, the technical problem underlying the present invention is to provide an heliostat allowing to obviate the above-mentioned drawbacks with reference to the known art.

Such problem is solved by the heliostat according to claim 1.

The present invention has some advantages. The main advantage consists in the fact that the heliostat according to the present invention allows performing a precise alignment, under any condition, both in the device initialization phase and in case of re-starting after a cloud passage.

Furthermore, the heliostat according to the present invention can be easily transported and it does not require any particularly complex phase of preliminary installation.

At last, the structure and the used components are simple and easy to be implemented.

Other advantages, features and use modes of the present invention will result evident from the following detailed description of some embodiments, shown by way of example and not for limitative purposes. The figures of the enclosed drawings will be referred to, wherein:
figures 1 e 2 are perspective views, according to different points of view, of the heliostat according to the present invention;
figures 3A e 3B are two perspective views, according to different points of view, of an optical sensor group, particular of the heliostat of figure 1;
figure 4 is a block diagramme illustrating the control scheme of the heliostat according to the present invention; and
figures 5A to 5D are perspective views illustrating different operating phases of the heliostat according to the present invention.

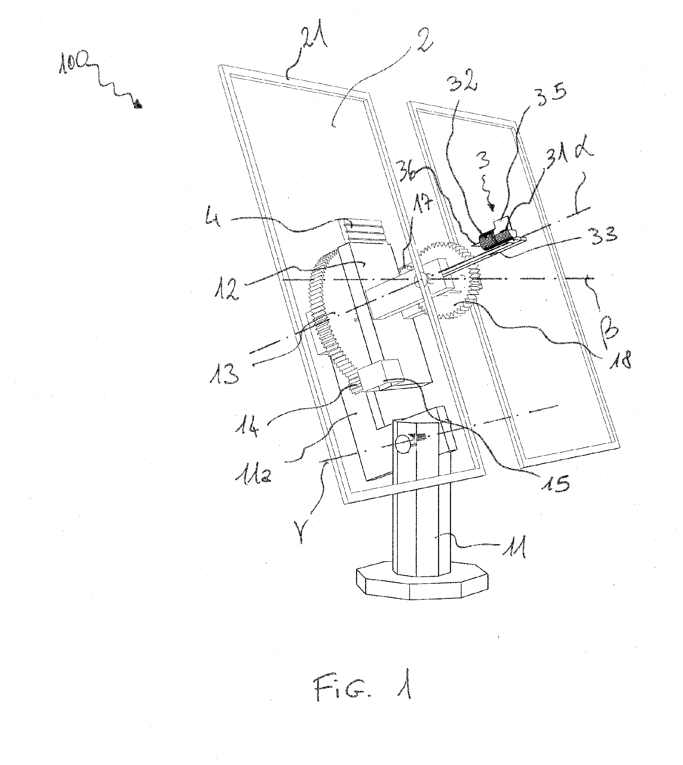

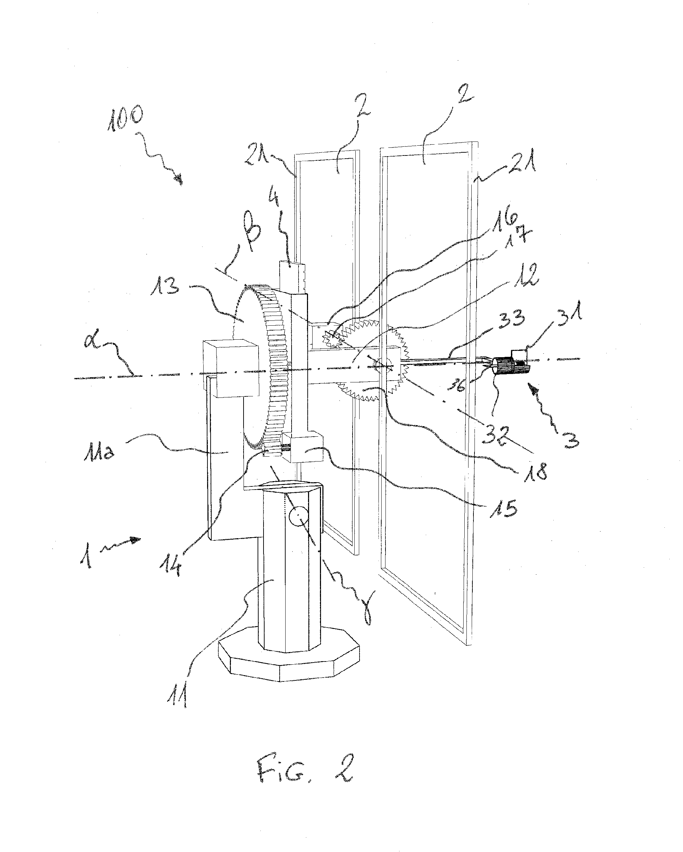

By initially referring to figures 1 and 2, an heliostat according to the present invention is designated as a whole with the reference number 100.

The heliostat 100 comprises a supporting structure 1, substantially implemented by means of a post 11 resting upon the ground and a revolving support 12. In particular, the support 12 can rotate with respect to the resting post 11 around a first rotation axis α, also designated hereinafter as main axis.

In the present embodiment, the resting post 11 is implemented by means of a pedestal-like structure which is simply rested upon the ground. It is evident that also different embodiments can be provided, such as, for example, a tripod. As As it will be clearer hereinafter, the heliostat according to the present invention does not require a fixed resting upon the ground and, therefore, it will be possible using any structure type which confers thereto sufficient stability during operation.

According to a preferred embodiment, the supporting structure 1 comprises furthermore an adjustable appendix 11a, hinged around an axis γ on the resting post 11 and thereto, at an opposite end, the revolving support 12 is fixed. The fastening structure 1 comprises furthermore means for locking the adjustable appendix 11a, not illustrated in figure, allowing selectively the rotation of the appendix 11a and the locking thereof in a pre-established inclination.

A reflecting member 2 is revolvingly fastened on the revolving support 12, which member can be implemented, for example, by means of a common plane mirror. The mirror 2 is fastened to the revolving support 12 by means a frame 21 which is hinged on a second rotation axis β, perpendicularly to the first rotation axis α. Such second rotation axis β will be also designated hereinafter as secondary axis.

The so-implemented structure allows then to the reflecting member 2 to rotate independently around the main rotation axis α and the secondary rotation axis β.

Still by referring to the figures 1 and 2, it has to be noted that the mirrors have been illustrated as transparent, for a better and clearer graphic representation of the remaining components of the heliostat. Furthermore, the reflecting member 2 of the heliostat according to the present invention advantageously can be formed by several mirrors spaced apart therebetween, in this case being in a number equal to two. In fact, such embodiment solution allows a minor resistance to the wind.

The mirrors could be connected therebetween in order to have a "Venetian blind"-like rotation on the secondary axis β so as to obtain a whole wide reflecting surface, by limiting at the same time the working space necessary to the structure during the solar tracking, the main axis α being normal to the plane of the mirrors.

It also must be understood that the reflecting member could be implemented even by means of solutions different from glass or metallic mirrors, for example by means of dielectric mirrors. Furthermore, even the shape of the reflecting member 2 could differ from the plane one, in particular depending upon the use type thereto the heliostat will be assigned.

Still as far as the reflecting member 2 is concerned, modular, foldable or demountable solutions could be used, so as to further promote the heliostat portability.

The motion of the reflecting member 2 around the main and secondary axes α, β is performed by means of electric motors 15, 16 associated to reducers with toothed wheels 13, 14, 17, 18.

According to the present embodiment, the motor 15 is fastened onto the revolving support 12 and it produces a rotation of the wheel 14. Such wheel 14 engages onto the reducing wheel 13, fastened to the resting post 11 at the appendix 11a. Consequently, the rotation of the wheel 14 onto the reducing wheel 13 will make the revolving support 12 to rotate around the main axis α, together with the motor 15, the reflecting member 2 and the other components fastened thereto.

As far as the rotation around the secondary axis β is concerned, as it is better visible in figure 2, the motor 16, fastened to the revolving support 12 actuates a wheel 17 which engages onto the reducing wheel 18, which has the rotation axis coincident with the axis β and it is integral to the reflecting member 2 or, more precisely, to the frame 21.

Such embodiment solution allows then to perform the rotation around the secondary axis β of the reflecting member 2 by means of the rotation of the motor 16.

In conclusion, the orientation of the reflecting member 2 with respect to the supporting post 11 can take place by controlling the motors 15 and 16.

The position of the reflecting member 2 with respect to the Sun is detected by means of a sensor group 3 positioned by means of a L-shaped bracket 33 in front of the reflecting member and in a direction substantially coincident with the main rotation axis α.

In particular, the sensor group 3 comprises two differential optical sensors, a first optical sensor 31, or searching sensor, for controlling the rotation of the reflecting member 2 around the main rotation axis and a second optical sensor 32, or elevation sensor, for controlling the rotation of the reflecting member 2 around the secondary rotation axis β.

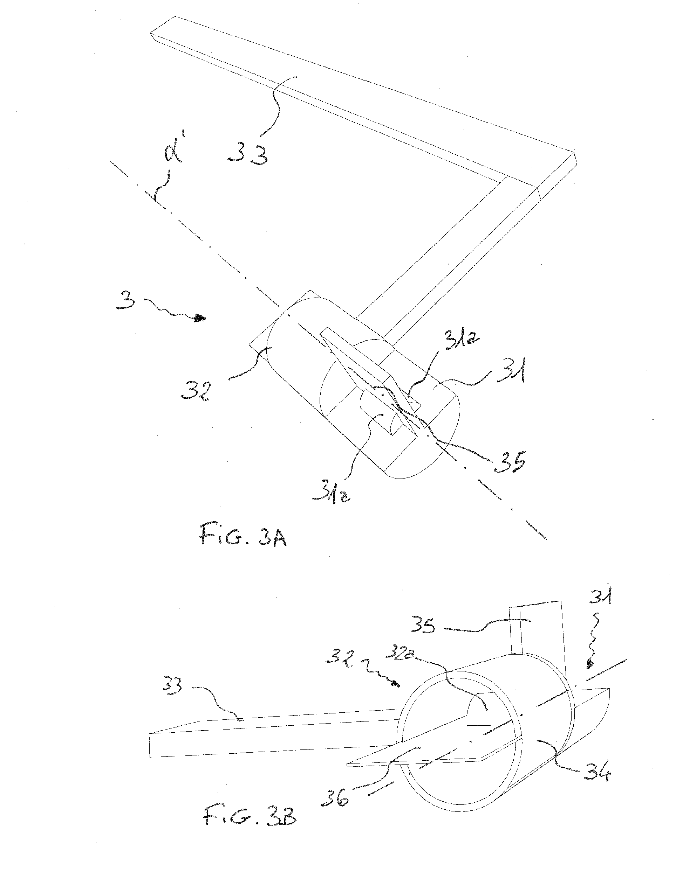

The sensors will be then illustrated in greater details in figures 3A and 3B.

The searching sensor 31 comprises two photosensible members 31a separated by a separating septum 35 shaped like a plate. The septum 35 is arranged radially to a sensor axis α' which is parallel to the main rotation axis α and which can be coincident thereto.

The two photosensible members 31a are adjacent to the septum 35 and can be both contemporarily illuminated by the solar light only when the septum 35 is parallel to the Sun rays. The control of the motor 15 of the main axis is then connected to such first sensor 31 and it will be so that the revolving support 12 will be made to rotate as long as the two members 31a will be both illuminated by the Sun, according to modes which will be described in greater detail hereinafter.

The second sensor 32, too, comprises two photosensible members 32a separated too by a separating septum 36 shaped like a plate. Such septum 36 in particular is perpendicular to the septum 35 of the first sensor 31 and furthermore has a plane development parallel to the secondary rotation axis β.

The photosensible members 32a face the reflecting member 2 and they are protected from the direct solar light by means of an opaque protection cylinder 34 with axis parallel to the axis α' and opened towards the reflecting member 2.

In a way conceptually analogous to the first sensor 31, also in this case the photosensible members 32a are both illuminated only when the light beam striking them is parallel to the septum 36.

It has to be noted that the reflecting member 2 can rotate with respect to the second sensor 32 around the secondary axis β. The sensor 32 is connected to the control of the motor 16, so as to be able to implement a rotation of the reflecting member 2 so that the light reflected therefrom is parallel to the axis α', in turn parallel to the main axis α.

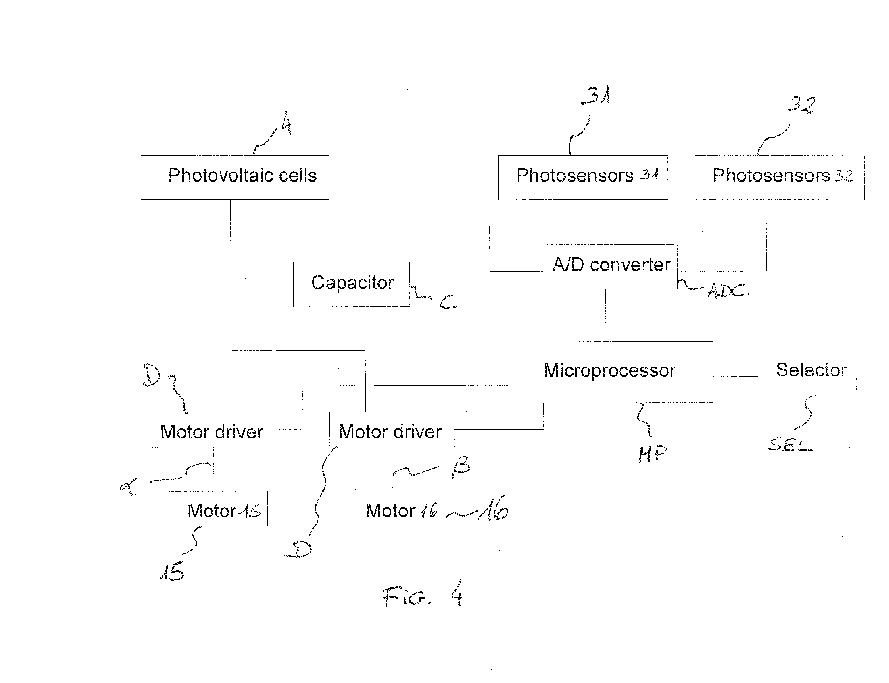

Figure 4 illustrates schematically the control scheme of the motors 15 and 16, based upon the detection of the sensors 31 and 32.

Advantageously, the system can be fed by a photovoltaic cell 4, also illustrated in figures 1 and 2. Furthermore, a capacitor C can be conveniently used as energy accumulating means. In fact, it must be comprised that, in the light of the sun motion slowness, a continuous control of the orientation of the reflecting member 2 is not necessary, but this can be simply performed at regular intervals, determined by the loading cycle of the capacitor C. Alternatively, given the modest energy need, in order to reduce the production cost thereof in domestic applications, the system can even be fed with batteries.

In the specific case, the control comprises, apart from the already described members, an analogic/digital controller ADC, connected to the sensors 31, 32 and to a microprocessor MP, associated to a selector SEL, which transmits the control signal to respective drivers D of the motor 15 and of the motor 16, implementing the control of the rotation around the axes α and β.

During the usual operation, the firmware programme contained in the microprocessor keeps waiting as long as the accumulated energy in the condensator has reached a sufficient level to be able to send to the motors 15 and 16 a pulse able to generate the motion. The direction of rotation and its duration is decided depending upon the intensity of light existing on the differential optical sensors positioned as described previously to detect the angulation of the light coming from the Sun. Once the motors are actuated and the energy available in the condensator is exhausted, the device comes back in a state waiting for the subsequent recharging. The set of the small motions produced by the repeated energy discharges on the motors will allow the device, by virtue of the slow solar motion, to keep the mirror always at the correct angulation.

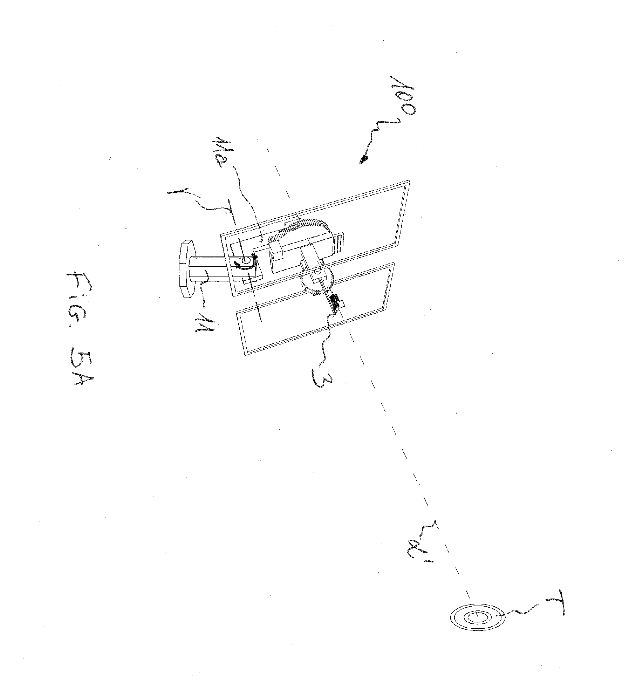

The operation modes of the heliostat according to the present invention are described hereinafter in greater details with reference to figures 5A to 5D.

By referring to figure 5A, the heliostat 100 is initially positioned on a surface, for example a ground, in order to be able to direct the solar rays towards a target T. The initial positioning takes place so that the main axis α faces the target T. In order to perform such operation it will be sufficient to orient the supporting structure 1 around an azimuthal axis thereof, to direct the main axis α to the target and, then, to adjust the inclination of the same axis α along the axis γ by means of the revolving appendix 11a.

In this way, the sensor group 3, and in particular the second sensor 32, will be directed towards the target T, these ones being parallel to the axis α. In other words, the main rotation axis α will be parallel to an alignment direction between the heliostat 100 and the target T. In the present embodiment such direction coincides with the one defined by the axis of the sensor α'.

In order to ease the just described operation for pointing towards the target T, the heliostat 100 can comprise a laser pointer, not illustrated in figure, directed in the direction of the axis α. Conveniently the laser pointer could be fastened to a L-shaped bracket 33 in position adjacent to the sensors 31 and 32.

It has to be noted that during the pointing operation the orientation of the reflecting member 2 with respect to the supporting structure 1 is wholly uninfluential.

Furthermore, such operation reveals particularly simple and quick thanks to the ease in transporting the heliostat according to the present invention, which requires a simple structure resting onto the ground.

Once performed such preliminary installation and the consequent pointing towards the target T, the heliostat is able to operate autonomously and, thanks to the energy produced by the photovoltaic cell, the alignment of the reflecting member 2 starts, so as to direct the reflected sun rays towards the target.

Such operation takes place mainly in two phases.

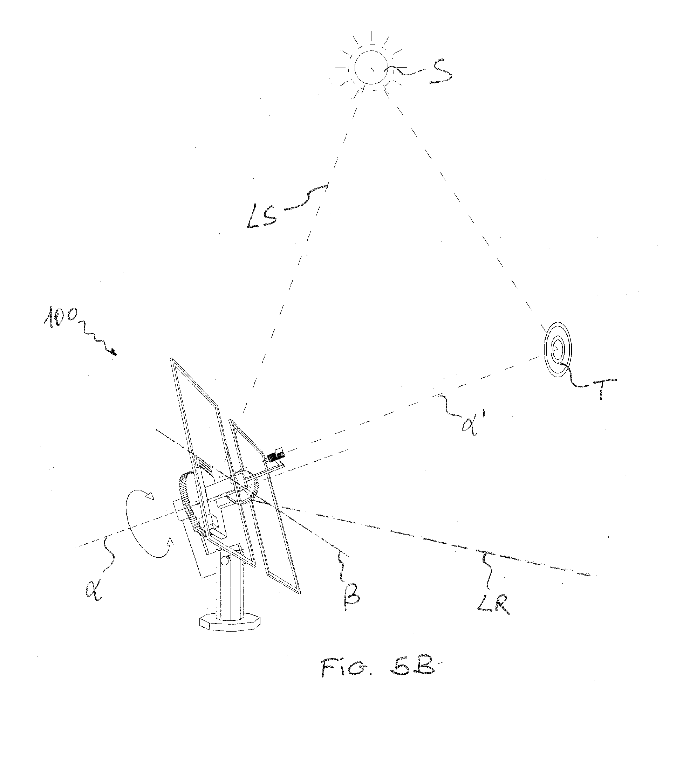

By referring to figure 5B, once having performed the pointing towards the target T, the reflecting member 2, together with the revolving support 12, performs a rotation around the main axis α, so as to perform a phase for searching for direction of the solar light.

As mentioned above, the rotation around the axis α takes place through the motor 15 as long as the first searching sensor 31 is aligned to the solar light LS or, more precisely, as long as the septum 35 is parallel to the solar light LS, by illuminating both photosensible members 31a. After such rotation, the light LR reflected by the reflecting members 2 will be directed along a direction lying inside a plane defined by the triangle having as vertexes the sun S, the target B and the heliostat 100.

The rotation of the reflecting member 2 around the secondary axis β, perpendicular to the septum 35 and, therefore, to the plane defined by the above-mentioned triangle, will produce a shifting in the orientation of the reflected light LR inside such plane. Such motion will be designated hereinafter as elevation motion.

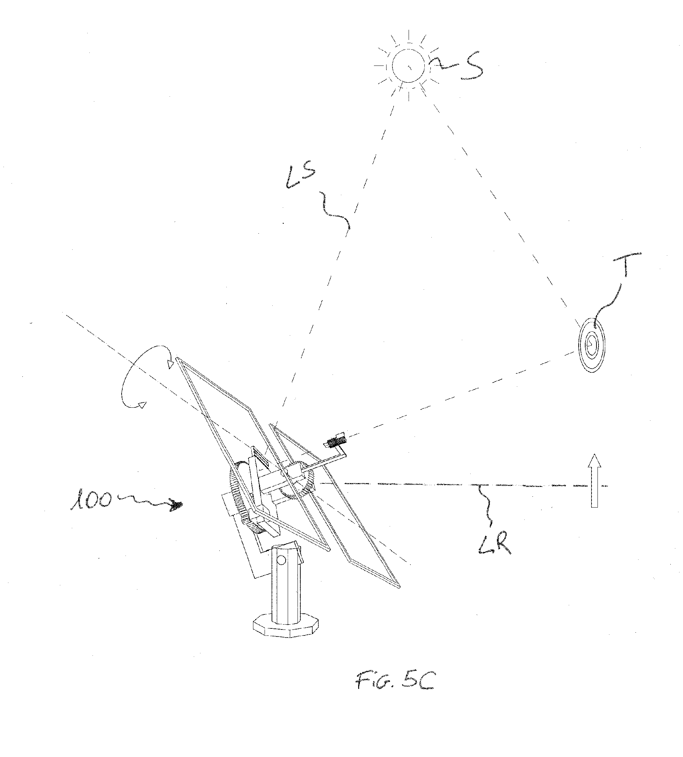

By referring to figure 5C, the heliostat control places in rotation, by controlling the motors according to above-described modes, the reflecting member 2 around the axis β as long as the reflected light LR strikes the second elevation sensor 32. Consequently, even the target T will be struck by the reflected light LR, having being aligned to the sensor 32 during the installation phase.

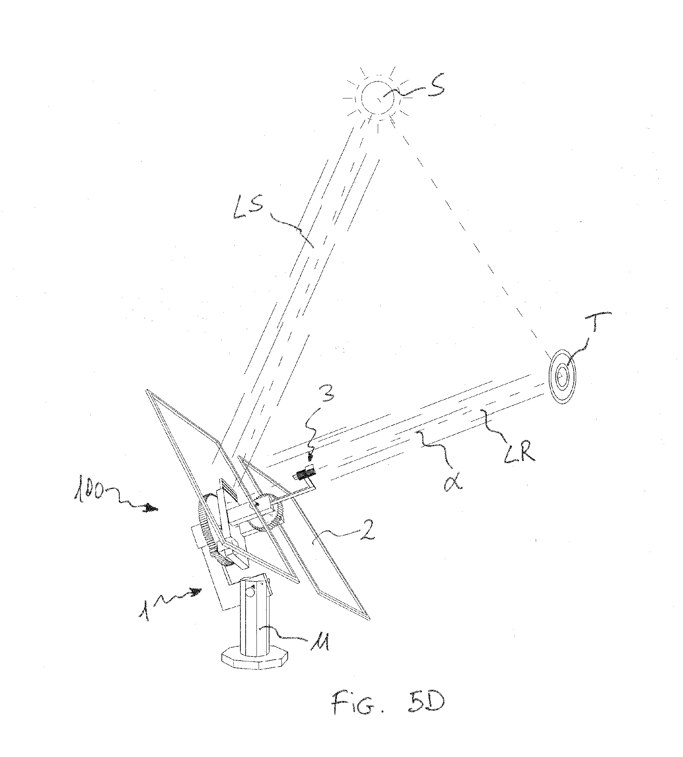

As illustrated in figure 5D, the alignment is kept during the operation of the heliostat by means of the control system described previously, with an adjustment at time intervals defined by the loading charges of the condensator C.

The arrangement of the two rotation axes α and β will allow keeping the alignment by operating in an independent way on the two axes, allowing a simple control of the motors.

In addition to the features illustrated above the control could provide even a function for limiting the intensity of the reflected light directed towards the target T.

In particular, a maximum threshold of luminous intensity receivable by the second sensor 32 can be provided, therebeyond the heliostat disaligns to avoid overcharging the target T, for example in case of use for concentration systems.

The heliostat according to the present invention will adapt then easily to the different possible applications. Among these, it is possible mentioning the domestic use for inner lighting by positioning the heliostat on window-sills, balconies, gardens, the urban use for the road lighting or the lighting of monuments and the industrial use, for example for passive desalinisators and energy production, both concentration thermal energy and photovoltaic electric energy.

The present invention has been sofar described by referring to preferred embodiments. It is to be meant that other embodiments may exist belonging to the same inventive core, all within the protection scope of the claims illustrated hereinafter.

## Claims

1. An heliostat (100) comprising:
a supporting structure (1) comprising a resting post (11) and a revolving support (12), said support (12) being revolving with respect to said resting post (11) around a main rotation axis (α);
a reflecting member (2) revolvingly mounted on said revolving support (12), so as to be able to be oriented with respect to said resting post (11) by means of rotations around said main rotation axis (α) and around an additional secondary rotation axis (β), perpendicular to said main rotation axis (α);
a first optical sensor (31) for controlling the rotation of the reflecting member (2) around to said main rotation axis (α);
a second optical sensor (32) for controlling the rotation of the reflecting member (2) around said secondary rotation axis (β), said second sensor (32) being placed frontally to the reflecting member (2), substantially aligned to said main rotation axis (α); and
**characterized in that** said main rotation axis (α) is parallel to an alignment direction between the heliostat (100) and a target (T) to be illuminated.

2. The heliostat (100) according to claim 1, wherein said first searching sensor (31) and said second elevation sensor (32) are both revolving around to said main axis (α) integrally to said reflecting member (2).

3. The heliostat t (100) according to claim 1 or 2, wherein said first sensor (31) comprises a pair of photosensible members (31a) separated by a separating septum (35).

4. The heliostat (100) according to one of the preceding claims, wherein said second sensor (32) comprises a pair of photosensible members (32a) separated by a separating septum (36) and a protection cylinder (34) opened towards said reflecting member (2) so as to protect said photosensible members (32a) from the exposition to the direct light (DL) and to be able to be struck by the reflected light (RL) of said reflecting member (2).

5. The heliostat (100) according to claims 3 and 4, wherein said septa (35, 36) have substantially the shape like a plate, the septum (35) of the first sensor (31) having an orientation substantially perpendicular to the orientation of the septum (36) of the second sensor (36).

6. The heliostat (100) according to one of the previous claims, wherein said second sensor (32) is connected to said revolving support (12) by means of a L-shaped bracket (33).

7. The heliostat (100) according to claim 6, wherein said L-shaped bracket further comprises a seat for housing a pointer apt to point to the direction of said main axis (α).

8. The heliostat (100) according to one of the previous claims, further comprising a solar cell (4) apt to provide the energy necessary to the motion of said reflecting member (2) around said rotation axis (α, β).

9. The heliostat (100) according to one of the previous claims, wherein said motion of said reflecting member (2) around said rotation axes (α, β) is associated to a control card, said control card comprising a condensator (C) apt to accumulate the energy necessary to the motion of the reflecting member (2) and to cede it at intervals defined by the charging cycle of said condensator (C).

10. The heliostat (100) according to claim 8 and 9, wherein said condensator (C) is fed by said solar cell (4).

11. The heliostat (100) according to one of the previous claims, wherein said motion of said reflecting member (2) around said rotation axes (α, β) is performed by means of respective electric motors (15, 16), said electric motors being integrally fastened to said revolving support (12).

12. The heliostat (100) according to one of the previous claims, wherein said supporting structure (1) comprises a revolving appendix (11a) apt to implement a connection revolving around a third axis (γ) perpendicular to said rotation axes (α, β) between said post (11) and said revolving support (12).
